# EUROPEAN PATENT SPECIFICATION

(11) **EP 0 593 030 B1**
(45) Date of publication and mention of the grant of the patent: **17.03.1999**
(21) Application number: 93116556.7
(22) Date of filing: 13.10.1993
(51) Int. Cl.: H04N 3/15, H04N 5/217

(54) **Solid-state imaging device**
Festkörper-Bildaufnahmevorrichtung
Capteur d'image à l'état solide

(30) Priority: 13.10.1992 JP 301694/92
(43) Date of publication of application: 20.04.1994
(73) Proprietor: SONY CORPORATION, Tokyo (JP)
(72) Inventor: Hamasaki, Masaharu, c/o Sony Corporation, Shinagawa-ku, Tokyo (JP)
(74) Representative: Müller, Frithjof E., Dipl.-Ing.

(56) References cited:
- EP-A- 0 473 966
- PATENT ABSTRACTS OF JAPAN vol. 14, no. 105 (E-0895) 26 February 1990 & JP-A-01 305 672 (NEC CORP) 8 December 1989
- PATENT ABSTRACTS OF JAPAN vol. 14, no. 259 (E-0937) 5 June 1990 & JP-A-02 078 382 (HITACHI LTD) 19 March 1990

## Description

### BACKGROUND OF THE INVENTION

### Field of The Invention

The present invention relates generally to a solid state imaging device having a plurality of horizontal transfer registers. More specifically the present invention relates to a charge coupled device (CCD) having a function for injecting a fixed amount of charge for a pilot signal into each of the horizontal transfer registers and thereby enabling controlling the gain of the output from each of the respective signal processing systems to substantially the same level.

### Description of The Prior Art

Solid state imaging devices such as CCD's are well known in the art which have a plurality of horizontal transfer registers. However, since each register incorporates its -own signal processing system, such as AGC circuits, and output units, etc., in order to assure correct color balance of the total image, it is necessary that gains between each register be balanced.

To balance the gains, a charge injection unit may be incorporated for each register for injecting a fixed pilot signal charge into each register, thus controlling the gains of each of the ACG (automatic gain control) circuits such that the outputs thereof are levelled. Such an arrangement is disclosed in Japanese Patent Application (First Publication) JP-A-04-096481 (see also EP-A-0 473 966).

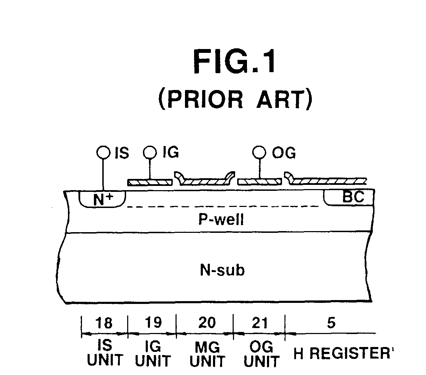

Such a conventional system of gain adjustment will be explained hereinbelow with reference to Fig. 1. As shown in Fig. 1, a charge injection unit 17 is composed of an IS (input source) unit 18 for injecting pilot signal charges, an MG (measuring gate) unit 20 for storing a fixed amount of charge, an IG (input gate) unit 19 for injecting charges from the IS unit 18 into the MG unit 20, an an OG (output gate) unit 21 for injecting the fixed charges stored in the MG unit 20 into the first horizontal transfer register 5.

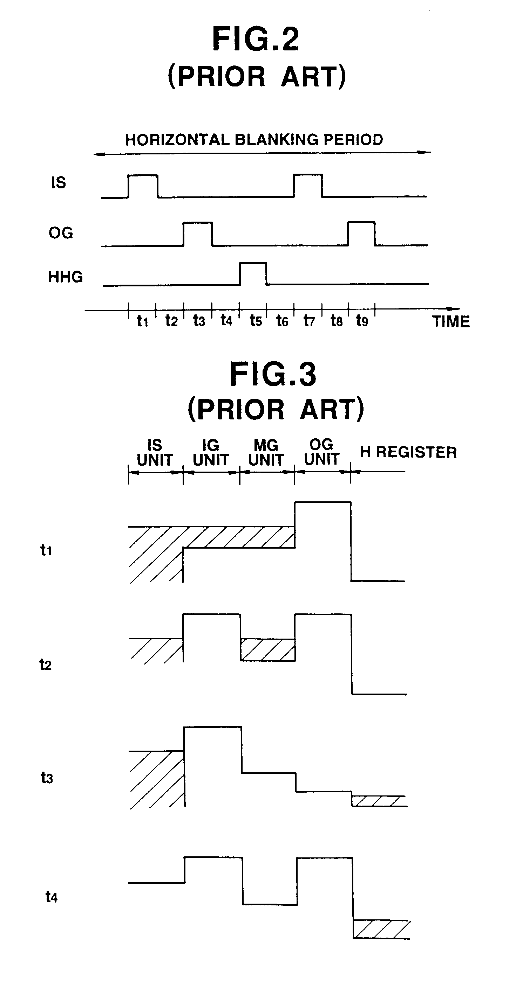

Hereinafter, operation of a charge injection unit 17 according to the diode cut-off method, as is well known in the art, will be described. Fig. 2 shows a timing chart of each gate pulse and Fig. 3 shows a potential at each timing increment.

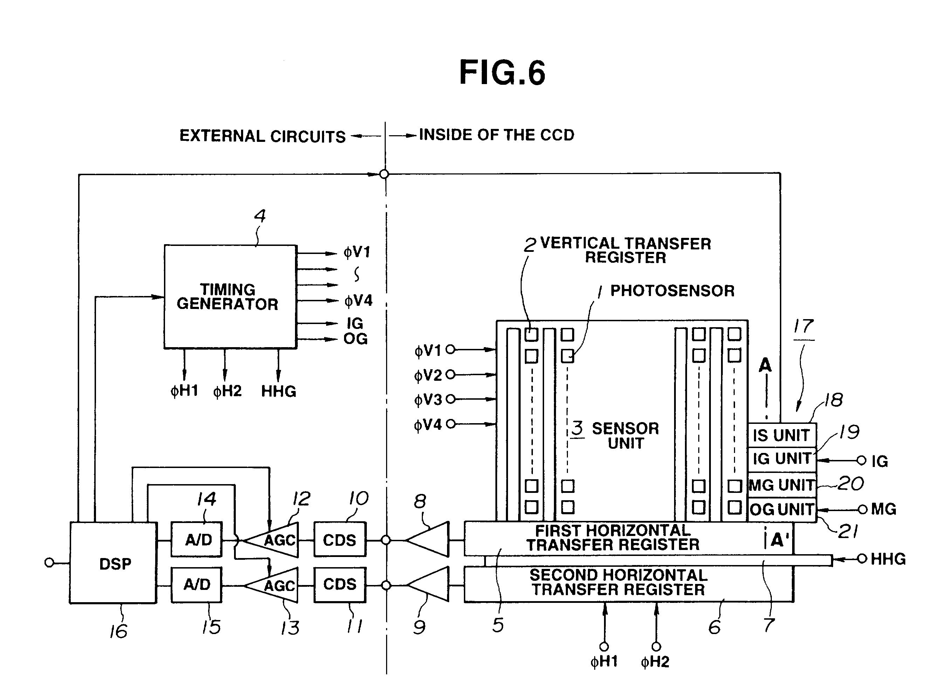

According to the example shown in Figs. and 3, during a time increment from tl to t2, and during an increment from t7 to t8, pilot signal charges are injected from the IS unit 18 into the MG unit 20 through the IG unit 19. At a time increment from t3 to t4, a fixed pilot signal charge stored in the MG unit 20 is transferred to the first horizontal register 5 through the OG unit 21, and at t5 to t6, the charge is transferred to the second horizontal transfer register 6 through an HH transfer gate 7 (see also Fig. 6).

The documents EP-A-0 473966 and JP-A-2 078 382 respectively disclose CCD's having a pair of horizontal registers. These devices work similar to the above described device.

However, in operation of a CCD solid-state imaging device, during a horizontal blanking period thereof, vertical transfer clocks φH1 - φV4 operate in order to transfer, vertically and simultaneously, signal charges which were read out from each photosensor 1 to vertical transfer registers 2. The potential of a P-well of the imaging device changes with time in constant proportion to the impedance of the P-well by the stop of horizontal transfer clocks φH1 and φH2 which were in operation during the horizontal transfer period, such that the potential of the P-well, differs slightly between time increments t1 to t2 and time increments t7 to t8, therefore, causing a difference in an amount of charge transferred to the first horizontal transfer register 5 and charges transferred to the second horizontal transfer register 6, and so on.

Accordingly, the first horizontal transfer register 5 and the second horizontal transfer register 6 respectively transfer different pilot signal charges and, as a result, the gains of the two signal processing systems cannot be controlled correctly.

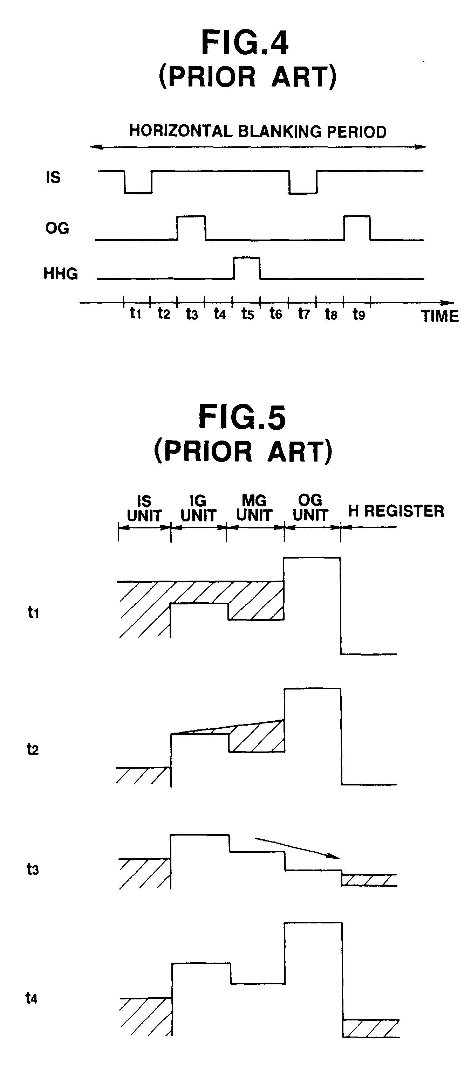

Fig. 4 is a timing chart showing gate pulses for illustrating operation according to the 'fill and spill' method, as is known in the art. Fig. 5 shows a potential at each timing.

The disadvantage of this example is quite the same as with the first example. That is, a device ot this type cannot correctly control gains of the two signal processing systems because the amounts of pilot signal charge injected into the two horizontal transfer registers 5 and 6 from the charge injection unit 17 are not the same. In addition, in the above case, the amounts of charge depend on the length of the time increment from t2 to t7.

In view of the above, it is required to provide a solid state image processing device in which a pilot signal charge injected into each horizontal transfer register can be levelled in order to provide equal gains for each signal processing path in the imaging device.

### SUMMARY OF THE INVENTION

It is therefore a principal object of the present invention to overcome the drawbacks of the prior art.

It is a further object of the present invention to provide a solid state image processing device in which a pilot signal charge injected into each horizontal transfer register can be levelled in order to provide equal gains for each signal processing path in the imaging device.

In order to accomplish the aforementioned and other objects, a solid state imaging device is provided comprising:
a plurality of two dimensionally arranged photosensors; a plurality of vertical transfer registers for vertically transferring signal charges generated at said plurality of photosensors for every vertical column thereof; a plurality of horizontal transfer registers for horizontally transferring signal charges transferred line by line from said plurality of vertical transfer registers according to a number of horizontal lines of said plurality of photosensors; and a charge injection unit for storing a fixed charge amount injected from an input source of a measuring gate and for supplying said fixed charge amount to said plurality of horizontal transfer registers, characterized in that said injection of said fixed charge amount from said input source via said measuring gate unit to said horizontal transfer registers is executed once in a horizontal blanking period of said solid state imaging device such that in one horizontal blanking period only one of said horizontal transfer registers is supplied with said fixed charge amount and in another horizontal blanking period another one of said horizontal transfer registers is supplied with said fixed charge amount.

Further preferred embodiments of the invention are defined in dependent claims 2 to 8.

### BRIEF DESCRIPTION OF THE DRAWINGS

In the drawings:
Fig. 1 is a cross-sectional view of a conventional solid state image processing device;
Fig. 2 is a timing chart of a diode cut-off operation according to conventional CCD operation;
Fig. 3 is a potential chart corresponding to the timing chart of Fig. 2;
Fig. 4 is a timing chart of a 'fill and spill' transfer operation according to the conventional method:
Fig. 5 is a potential chart corresponding to the timing chart of Fig. 4;
Fig. 6 is a a block diagram showing a preferred embodiment of an interline transfer type CCD solid state imaging device;
Fig. 7 is a cross-sectional view taken along line A - A of Fig. 6;
Fig. 8 is a timing chart for an operation using the diode cut-off method while applying DC biases to an MG unit;
Fig. 9 is a potential chart corresponding to the timing chart of Fig. 8;
Fig. 10 is a timing chart for an operation using the diode cut-off method while applying a gate pulse to the MG unit;
Fig. 11 is a potential chart corresponding to the timing chart of Fig. 10;
Fig. 12 is a timing chart for an operation using the 'fill and spill' method while applying DC biases to the MG unit;
Fig. 13 is a potential chart corresponding to the timing chart of Fig. 12;
Fig. 14 is a timing chart for an operation using the 'fill and spill' method while applying a gate pulse to the MG unit;
Fig. 15 is a potential chart corresponding to the timing chart of Fig. 14;

### DESCRIPTION OF THE PREFERRED EMBODIMENT

Referring now to the drawings, particularly to Fig. 6, a preferred embodiment of an interline transfer CCD solid-state imaging device is shown.

As may be seen in the drawing, a plurality of photosensors 1 are two-dimensionally arranged by pixels and vertical transfer registers 2 are arranged at every vertical array of photosensors 1 for vertically transferring signal charges generated at the photosensors 1, forming an interline transfer imaging unit 3.

The vertical transfer registers 2 may be driven by, for example, four-phase vertical transfer clocks φV1 to φV4 generated at a timing generator 4.

Below the imaging unit 3, first and second horizontal transfer registers 5 and 6 are arranged for horizontally transferring signal charges transferred line by line from the vertical transfer register 2. The first and second horizontal transfer registers 5 and 6 are driven by, for example, two-phase horizontal clocks φH1 and φH2 generated at the timing generator 4.

Between the first horizontal transfer register 5 and the second horizontal transfer register 6, there is provided an HH transfer gate 7 for synchronizing signal charges for one line transferred to the first horizontal transfer register 5 from the vertical transfer registers 2, via HHG pulses generated at the timing generator 4, and transferring them to the second horizontal transfer register 6.

At HH transfer, the HH transfer gate 7 selectively transfers signal charges for one line from the first horizontal transfer register 5 to the second horizontal transfer register 6. According to this, odd lines become horizontally transferrable from the first horizontal transfer register 5 and even lines become horizontally transferrable from the second horizontal transfer register 6. Signal charges transferred by the first and second horizontal transfer registers 5 and 6 are detected at output units 8 and 9 which may be formed, for example, as floating diffusion amplifiers, or the like, whose output signals are then converted into voltage signals.

Each of the output voltages from the output units 8 and 9 is processed to reduce reset noise at CDS (correlation double sampling) circuits 10 and 11, then the gains thereof are levelled at AGC (automatic gain control) circuits 12 and 13. Then, the voltage signals are digitized at A/D converters 14 and 15, and supplied to a DSP (digital signal processing) circuit 16.

At the back of the first and second horizontal transfer registers 5 and 6, provided in the transfer direction, a charge injection unit 17 is provided for injecting pilot signal charges into the first and second horizontal transfer registers 5 and 6 in order to balance the gains of the two signal processing systems (i.e. the output units, CDS circuits, AGC circuits and A/D converters provided for each horizontal transfer register).

As stated above in connection with the prior art, the charge injection unit 17 is comprised of an IS unit 18 for injecting pilot signal charges, an MG unit 20 for storing a fixed charge amount, an IG unit 19 for injecting pilot signal charges from the IS unit 18 into the MG unit 20, and an OG unit 21 for injection the fixed charge amount stored in the MG unit 20 into the first horizontal transfer register 5. It will be noted that the charge injection unit may be prepared for use with transfer registers having from one to dozens of bits, depending on the specific nature of the imaging device.

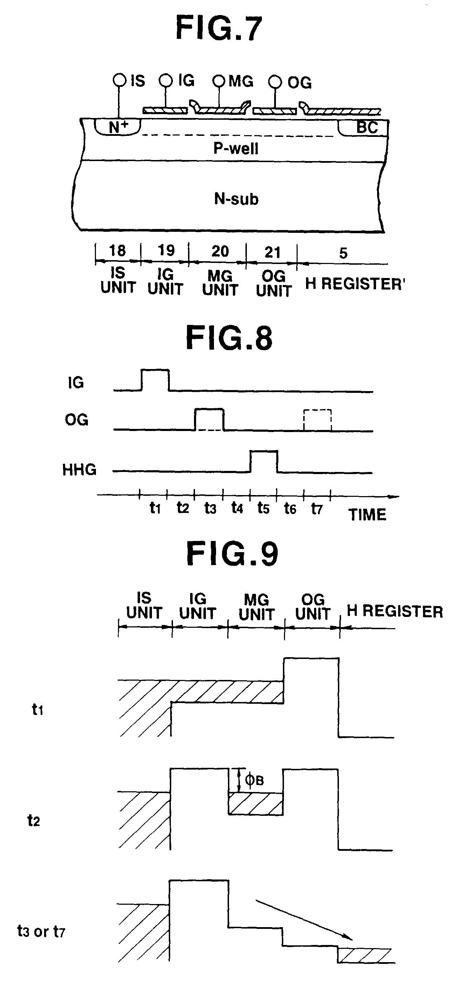

Referring to Fig. 7, a sectional view of the charge injection unit 17 of the interline transfer type CCD, taken along line A - A of Fig. 6 is shown. The IG unit 19, the MG unit 20 and the OG unit 21 may be of a surface channel type, for example, in which potential wells are prepared near the surfaces of a silicon substrate or, the IG, MG and OG units may be of a closed channel type in which the transfer of charges is executed at channels prepared slightly beneath the surface of the silicon substrate.

An input voltage is applied to the IS unit 18 from the DSP circuit 16 and gate pulses IG and OG, generated at the timing generator 4 are applied to the IG unit 19 and the OG unit 21 respectively. At the MG unit 20, fixed DC biases, or gate pulses, are applied. The gate pulse IG is generated at a timing of injection of charge from the IS unit 18 into the MG unit 20, for a time fraction 1H of a horizontal blanking period H.

Next, operation of the charge injection unit 17 for injecting pilot signal charges and achieving balanced gains at outputs of the above-described CCD will be explained in detail.

Fig. 8 is a timing chart for an operation using the diode cut-off method for the charge injection unit 17 and Fig. 9 shows a potential at each stage of the timing chart. It will be noted that a fixed DC bias is applied to the MG unit 20 in this example.

First, application of the gate pulse IG to the IG unit 19 allows injection of the pilot signal charge from the IS unit 18 to the MG unit 20 during a time from t1 to t2. At that time, a condition wherein φB > 1V must be satisfied when charges are applied to the MG unit 20, wherein φB is a potential difference between charges stored at the MG unit 20 and the IG unit 19 at the time t2.

Next, transfer of charges for even lines is executed at the second horizontal transfer register 6. Thus, application of the gate pulse OG to the OG unit 21 for injecting a fixed pilot signal charge from the MG unit 20 into the first horizontal transfer register 5 must take place at a time before t5 to t6, when HH transfer is executed from the first horizontal transfer register 5 to the second horizontal transfer register 6. A time t3, for example, may be selected for this operation. Then, as noted above, at a time between t5 to t6, the HH transfer from the first horizontal transfer register 5 to the second horizontal transfer register 6 is accomplished.

On the other hand, for odd lines, application of the gate pulse OG to the OG unit 21 at a time t7, allows injection of the pilot signal charge stored at the MG unit 20 into the first horizontal transfer register 5.

As noted above, the injection of pilot signal charges from the IS unit 18 into the MG unit 20 is so executed that the time of 1H between t1 and t2 during a horizontal blanking period can be adjusted to establish the same timings for injection of pilot signal charges into both of the first and second horizontal transfer registers 5 and 6.

According to this, the potential in the P-well due to operation of the vertical transfer clocks φV1 - φV4 or due to stopping of the horizontal transfer clocks φH1 and φH2 during the horizontal blanking period, is always the same. Therefore, the amount of a pilot signal charge stored in the MG unit 20 is always constant.

As a result, identical pilot signal charges can be transferred to the first and second horizontal transfer registers 5 and 6 and correct detection of scattering of gains for their respective signal processing systems is enabled. Accordingly, correct balancing of gains can be realized.

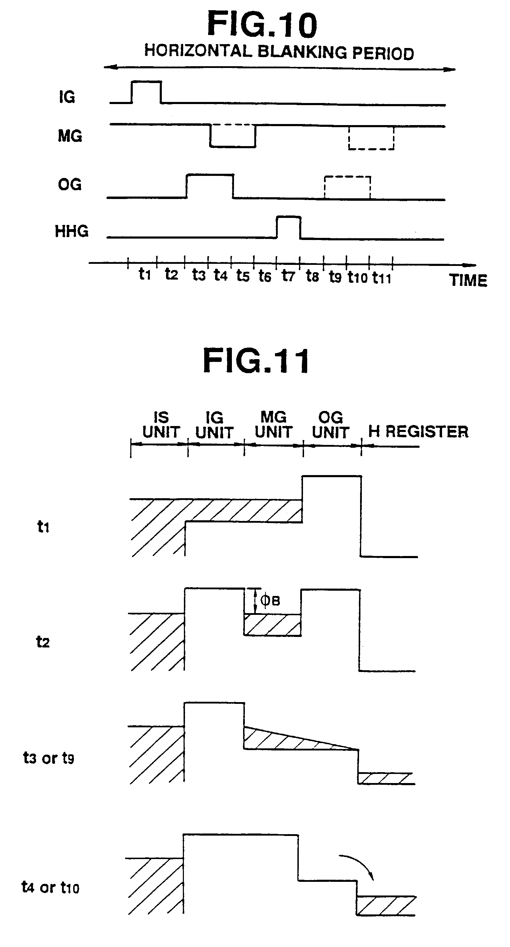

The above embodiment illustrates a case in which fixed DC biases are continuously applied to the MG unit. However, the advantages of the present invention may also be obtained in a case wherein a gate pulse MG is applied to the MG unit 20. Fig. 10 shows a timing chart for such operation and Fig. 11 is a potential chart corresponding to the timing of Fig. 10.

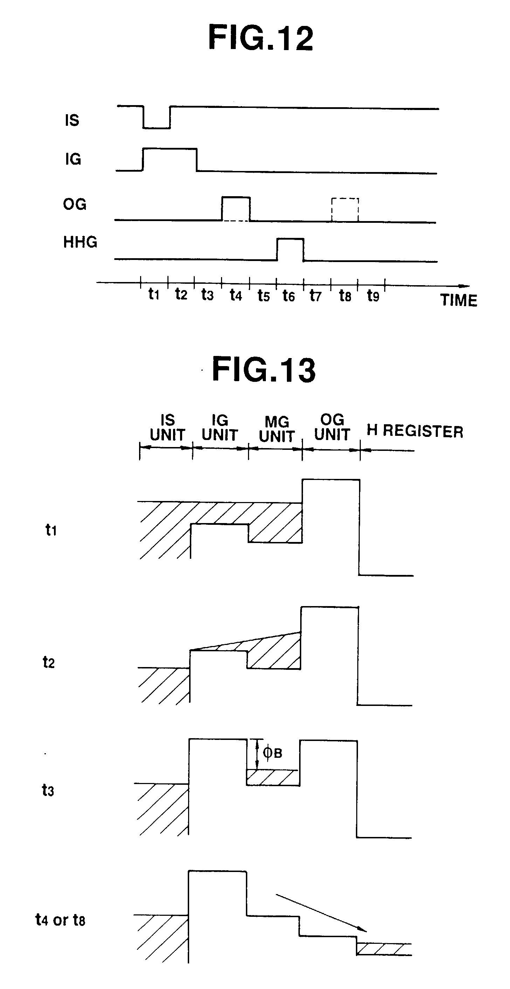

Fig. 12 is a timing chart for an operation wherein the 'fill and spill' method is applied for charge injection. Fig. 13 is a potential chart corresponding to the timing of Fig. 12. According to this example, a fixed DC bias is always applied to the MG unit 20.

In the present example, in which the 'fill and spill' method is applied, in the same way as with the diode cut-off method, the pilot signal charge is injected from the IS unit 18 into the MG unit 20 during a timing between t1 and t2. For the even lines, a fixed amount of the pilot charge stored at the MG unit 20 is injected into the first horizontal transfer register 5 at a time t3, and HH transfer is executed during a time from t5 to t6. For the odd lines, pilot signal charges are injected from the MG unit 20 into the first horizontal transfer register 5 at t7. In this case, the condition of φB > 1V must be satisfied also.

As is mentioned above, the injection of pilot signal charges form the IS unit 18 into the MG unit 20 is executed once in a horizontal blanking period for a duration of 1H to make the amount of charge stored in the MG unit 20 constant each time. Therefore, the same pilot charge can be injected into the first and second horizontal transfer registers 5 and 6. Accordingly, correct balancing of gains for the two signal processing systems may be reliably obtained.

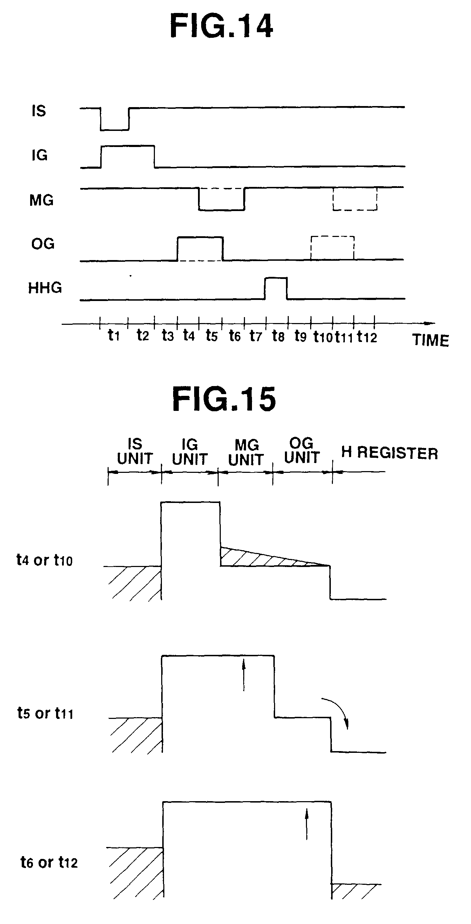

A similar result is also obtainable in a case where a gate pulse MG is applied to the MG unit 20. Fig. 14 is a timing chart illustrating such operation, while Fig. 15 is a potential chart corresponding to the timing of Fig. 14. In Fig. 15 it will be noted that potentials for t1, t2 and t3 are omitted as these potentials correspond to timings t1, t2 and t3 of Fig. 13.

Thus, according to the present invention, in a solid-state imaging device having a plurality of horizontal transfer registers, the injection of pilot signal charges from an input source unit into a measuring gate unit of a charge injection unit is set to a fraction 1H of the horizontal blanking period for subsequent injection of the pilot signal charge from the charge injection unit to a horizontal transfer register in order to balance gains for a plurality of signal processing paths associated with each of the horizontal transfer registers, by making the time relation for determining the amount of the pilot signal charge during the horizontal blanking period always the same.

Accordingly, a constant pilot charge can be stored in the measuring gate assuring that a pilot charge of each time the same amount is injected into the horizontal transfer registers. Thus, correct detection of scattering of gains for the plurality of signal processing systems can also be enabled.

While the present invention has been disclosed in terms of the preferred embodiment in order to facilitate better understanding thereof, it should be appreciated that the invention can be embodied in various ways without departing from the principle of the invention as set forth in the appended claims.

## Claims

1. A solid state imaging device, comprising:
a plurality of two-dimensionally arranged photosensors (3);
a plurality of vertical transfer registers (2) for vertically transferring signal charges generated at said plurality of photosensors for every vertical column thereof;
a plurality of horizontal transfer registers (5, 6) for horizontally transferring signal charges transferred line by line from said plurality of vertical transfer registers according to a number of horizontal lines of said plurality of photosensors; and
a charge injection unit (17) for storing a fixed charge amount injected from an input source (18) of a measuring gate (20) and for supplying said fixed charge amount to said plurality of horizontal transfer registers (5, 6), characterized in that said injection and supplying of said fixed charge amount from said input source via said measuring gate unit to said horizontal transfer registers is executed once in a horizontal blanking period of said solid state imaging device such that in one horizontal blanking period only one (6) of said horizontal transfer registers is supplied with said fixed charge amount and in another horizontal blanking period another one (5) of said horizontal transfer registers is supplied with said fixed charge amount.

2. A solid state imaging device as set forth in claim 1, wherein said fixed charge amount is successively transferred to each of said plurality of horizontal transfer registers from said charge injection unit, in respective successive horizontal blanking periods.

3. A solid state imaging device as set forth in claim 2, wherein two of said horizontal transfer registers are provided which alternately execute horizontal transfer of said fixed charge amount injected from said charge injection unit for time periods corresponding to two times the duration of said horizontal blanking period.

4. A solid state imaging device as set forth in claim 1, wherein injection of said fixed charge amount from said input source into said measuring gate in said charge injection unit is executed at the same timing and for equal durations for both of even and odd numbered ones of said horizontal lines.

5. A solid state imaging device as set forth in claim 3, wherein injection of said fixed charge amount from said input source into said measuring gate in said charge injection unit is executed at the same timing and for equal durations for both of said horizontal transfer registers.

6. A solid state imaging device as set forth in claim 5, wherein said timing durations are respectively equal to a fraction (1H) of said horizontal blanking period.

7. A solid state imaging device as set forth in claim 1, wherein a diode cut-off method is utilized for said injection.

8. A solid state imaging device as set forth in claim 1, wherein a fill and spill method is utilized for said injection.

## Patentansprüche

1. Festkörper-Bildaufnahmevorrichtung, umfassend:
eine Vielzahl von zweidimensional angeordneten Photosensoren (3),
eine Vielzahl von Vertikal-Transferregistern (2) zum vertikalen Übertragen von Signalladungen, die an der Vielzahl von Photosensoren erzeugt sind, für jede Vertikal spalte hiervon,
eine Vielzahl von Horizontal-Transferregistern (5, 6) zum horizontalen Übertragen von Signalladungen, die Linie für Linie von der Vielzahl von Vertikal-Transferregistern übertragen sind, gemäß einer Anzahl der Horizontallinien der Vielzahl von Photosensoren, und
eine Ladungsinjektionseinheit (17) zum Speichern einer festen Ladungsmenge, die von einer Eingangsquelle (18) eines Meßgatters (20) injiziert ist, und zum Einspeisen der festen Ladungsmenge zu der Vielzahl von Horizontal-Transferregistern (5, 6), dadurch gekennzeichnet, daß die Injektion und das Einspeisen der festen Ladungsmenge von der Eingangsquelle über die Meßgattereinheit zu den Horizontal-Transferregistern einmal in einer Horizontal-Austastperiode der Festkörper-Bildaufnahmevorrichtung derart ausgeführt wird, daß in einer Horizontal-Austastperiode lediglich eines (6) der Horizontal-Transferregister mit der festen Ladungsmenge versorgt ist und in einer anderen Horizontal-Austastperiode ein anderes (5) der Horizontal-Transferregister mit der festen Ladungsmenge versorgt ist.

2. Festkörper-Bildaufnahmevorrichtung nach Anspruch 1, bei der die feste Ladungsmenge nacheinander zu jedem der Vielzahl von Horizontal-Transferregistern von der Ladungsinjektionseinheit in jeweiligen aufeinanderfolgenden Horizontal-Austastperioden übertragen wird.

3. Festkörper-Bildaufnahmevorrichtung nach Anspruch 2, bei der drei der Horizontal-Transferregister vorgesehen sind, die abwechselnd eine Horizontalübertragung der festen Ladungsmenge, die von der Ladungsinjektionseinheit injiziert ist, für Zeitdauern entsprechend dem Zweifachen der Dauer der Horizontal-Abtastperiode ausführen.

4. Festkörper-Bildaufnahmevorrichtung nach Anspruch 1, bei der die Injektion der festen Ladungsmenge von der Eingangsquelle in das Meßgatter in der Ladungsinjektionseinheit zu den gleichen Zeiten und für gleiche Zeitdauern für geradzahlige und ungeradzahlige Linien der Horizontallinien ausgeführt wird.

5. Festkörper-Bildaufnahmevorrichtung nach Anspruch 3, bei der eine Injektion der festen Ladungsmenge von der Eingangsquelle in das Meßgatter in der Ladungsinjektionseinheit zu den gleichen Zeiten und für gleiche Zeitdauern für beide der Horizontal-Transferregister ausgeführt wird.

6. Festkörper-Bildaufnahmevorrichtung nach Anspruch 5, bei der die Zeitdauern jeweils gleich zu einem Bruchteil (1H) der Horizontal-Austastperiode sind.

7. Festkörper-Bildaufnahmevorrichtung nach Anspruch 1, bei der eine Dioden-Abschaltmethode für die Injektion verwendet wird.

8. Festkörper-Bildaufnahmevorrichtung nach Anspruch 1, bei der eine Füll- und Überlaufmethode für die Injektion verwendet wird.

## Revendications

1. Capteur d'image à l'état solide comprenant :
une pluralité de photo-capteurs disposés bidimensionnellement (3) ;
une pluralité de registres de transfert vertical (2) pour transférer verticalement des charges de signal générées sur ladite pluralité de photo-capteurs pour chaque colonne verticale de ceux-ci ;
une pluralité de registres de transfert horizontal (5, 6) pour transférer horizontalement des charges de signal transférées ligne par ligne à partir de ladite pluralité de registres de transfert vertical selon un nombre de lignes horizontales de ladite pluralité de photo-capteurs ; et
une unité d'injection de charges (17) pour stocker une quantité de charges fixe injectée à partir d'une source d'entrée (18) d'une grille de mesure (20) et pour fournir ladite quantité de charges fixe à ladite pluralité de registres transfert horizontal (5, 6), caractérisé en ce que ladite injection et fourniture de ladite quantité de charges fixe à partir de ladite source d'entrée via ladite unité de grille de mesure auxdits registres de transfert horizontal est exécutée une fois pendant une période de suppression horizontale de faisceau dudit capteur d'image à l'état solide de sorte que pendant une période de suppression horizontale de faisceau seulement un (6) desdits registres de transfert horizontal reçoit ladite quantité de charges fixe et pendant une autre période de suppression horizontale de faisceau un (5) desdits registres de transfert horizontal reçoit ladite quantité de charges fixe.

2. Capteur d'image à l'état solide selon la revendication 1, dans lequel ladite quantité de charges fixe est successivement transférée à chacun de ladite pluralité de registres de transfert horizontal à partir de ladite unité d'injection de charges, pendant des périodes successives respectives de suppression horizontale de faisceau.

3. Capteurs d'image à l'état solide selon la revendication 2, dans lequel deux desdits registres de transfert horizontal sont fournis qui exécutent alternativement un transfert horizontal de ladite quantité de charges fixe injectée à partir de ladite unité d'injection de charges pendant des périodes de temps correspondants à deux fois la durée de ladite période de suppression horizontale de faisceau.

4. Capteur d'image à l'état solide selon la revendication 1, dans lequel l'injection de ladite quantité de charges fixe à partir de ladite source d'entrée dans ladite grille de mesure dans ladite unité d'injection de charges est exécutée à la même temporisation et pendant des durées égales pour les deux de celles numérotées paires et impaires des lignes horizontales.

5. Capteur d'image à l'état solide selon la revendication 3, dans lequel l'injection de ladite quantité de charges fixe à partir de ladite source d'entrée dans ladite grille de mesure dans ladite unité d'injection de charges est exécutée à la même temporisation et pendant des durées égales pour les deux desdits registres de transfert horizontal.

6. Capteur d'image à l'état solide selon la revendication 5, dans lequel lesdites durées de temporisation sont respectivement égales à une fraction (1H) de ladite période de suppression horizontale de faisceau.

7. Capteur d'image à l'état solide selon la revendication 1, dans lequel un procédé de blocage de diode est utilisé pour ladite injection.

8. Capteur d'image à l'état solide selon la revendication 1, dans lequel un précédé de remplissage et de vidage est utilisé pour ladite injection.
